# EUROPEAN PATENT SPECIFICATION

(11) **EP 1 499 072 B1**
(45) Date of publication and mention of the grant of the patent: **08.09.2010**
(21) Application number: 04016719.9
(22) Date of filing: 15.07.2004
(51) Int. Cl.: H04L 12/46, H04L 29/12, H04B 3/54

(54) **Method for interconnecting a PLC LAN with any other non-PLC LAN**
Verfahren zur Verbindung von PLC-Netzwerken mit anderen lokalen Netzwerken
Procédé pour l'interconnection de réseaux par courant porteur (PLC) avec d'autres réseaux locaux

(30) Priority: 17.07.2003 US 622903
(43) Date of publication of application: 19.01.2005
(73) Proprietor: Sharp Kabushiki Kaisha, Osaka (JP)
(72) Inventor: Park, Daniel John, Beaverton, Oregon 97006 (US)
(74) Representative: Müller - Hoffmann & Partner

(56) References cited:
- EP-A- 1 244 326
- EP-A2- 1 217 475
- WO-A-97/47113
- US-B1- 6 587 739

## Description

### Field of the Invention

This invention relates to power line networks, and specifically to a method of routing traffic within, onto, and off of a power line based network.

### Background of the Invention

The addressing used in the media access control (MAC) headers on non-power line communication (PLC) local area networks (LANs) are significantly different than the addressing used within a PLC LAN. This is due to the connection-oriented nature of the PLC LAN, and the connectionless nature of other LAN technologies, such as Ethernet.

In a PLC LAN, stations are not able to receive all packets from all stations, as is the case in other LAN technologies, such as Ethernet. Rather, PLC stations have a limited ability to broadcast to all stations, and are not able to receive traffic on a PLC connection unless the station is a participant in the PLC connection. A PLC bridge device emulates, to external LANs, the general broadcast nature of LANs, such as Ethernet, when communication is initiated with any station on the PLC LAN side of the PLC bridge.

U.S. Patent No. 6,337,863, to Nair *et al.,* granted January 8, 2002, for *Seamless communication service with intelligent edge devices,* describes an improvement over ATM LAN Emulation (LANE) methods for connecting LANs over a connection-oriented ATM network. This reference describes a coordination device, as in PLC, to distribute end station information, but only PLC station information is distributed, rather than information on all end stations, *e.g.*, the bridging tables. A single connection between ATM nodes is used to carry all bridged traffic. The reference describes service to end stations only off of the ATM network.

U.S. Patent No. 6,151,324, to Belser *et al.,* granted November 21, 2000, for *Aggregation of MAC data flows through pre-established path between ingress and egress switch to reduce number of number connections,* describes edge switches, which aggregate traffic between ATM edge nodes for all bridged traffic between the switches. The reference describes interworking of MAC packet headers at the ingress and egress nodes, using a connection identifier (VPI, VCI) as a means to restore the original MAC addresses at the egress node after the ingress node has stripped off MAC addresses before transmission on the connection oriented, ATM network.

Patent Application WO0076122 for *LAN emulation using paired unicast and broadcast virtual connections,* describes bridges which use internal multicast to distribute bridged broadcast and bridged "unknown" packets as part of a learning process. The bridges use the information from the broadcasted packets to determine which unicast connection to use. This method uses a single connection to forward frames within the bridged LAN.

Japanese 04107029 for *System for connection between local area networks,* describes a system to learn of external (bridged) stations at the bridges and store that information locally, and a method to communicate to ingress nodes, wherein an egress node has an end station on one of its ports.

EP-A-1 217 475 discloses an apparatus and a method for remotely controlling household appliances which comprises a built-in Web server installed in a household appliance for assigning an Internet protocol (IP) address to the household appliance and extracting control information associated with the assigned IP address from a control signal sent through an external communication network. The apparatus further comprises a household appliance control unit for controlling the entire operation of the household appliance according to the control information extracted by the built-in Web server. The built-in Web server includes a communication interface for interfacing the household appliance to the external communication network which includes an address memory for storing MAC address information for identification of household appliances and IP addresses assigned respectively to the appliances through the built-in Web server on the basis of the MAC address information.

EP-A-1 244 326 discloses a house code setting method and power line transport communication system which comprises a plurality of terminals which are connected by a power line and which exchange information through the power line. To each of the plurality of terminals intrinsic terminal identifiers are given and each of the terminals holds a house code to prevent interference between another system and its own system. The house code is generated as a code common to the same system on the basis of the terminal identifier given to a master terminal selected from the respective terminals belonging to the same system. In a preferred embodiment a format of a MAC address is used as a format of the terminal identifier.

### Summary of the Invention

It is an object of the invention to provide a method of controlling packet transmission in a power line communication (PLC)-based local area network (LAN) and of interworking packets between the PLC LAN and any other non-PLC LAN according claim 1.

It is an object of the invention to provide a method of interworking packets received at the edge of a PLC network by PLC MAC bridging devices so that packets may efficiently traverse between the PLC LAN and differing network technologies.

Related to the invention is a PLC MAC bridging device attached to separate physical LANs such that the stations are unaware that they are communicating with different LANs.

This summary and objectives of the invention are provided to enable quick comprehension of the nature of the invention. A more thorough understanding of the invention may be obtained by reference to the following detailed description of the preferred embodiment of the invention in connection with the drawings.

### Brief Description of the Drawings

Fig. 1 depicts a prior art, generic MAC bridge.
Fig. 2 depicts a PLC MAC bridging device
Fig. 3 depicts a sample PLC LAN configuration.
Fig. 4 depicts a MAC packet structure.
Fig. 5 depicts an Intra-PLC LAN communication.
Fig. 6 depicts bridged communication onto the-PLC LAN.
Fig. 7 depicts a bridged communication across the-PLC LAN of Fig. 3.

### Detailed Description of the Preferred Embodiments

This invention, provides a method of interworking packets received at the edge of a PLC network by PLC MAC bridging device so that packets may efficiently traverse between the PLC LAN and differing network technologies. A PLC MAC bridging device is attached to separate physical LANs such that the other stations on the LAN are unaware that they are communicating over differing LAN technologies.

The invention provides a method for bridging media access control (MAC) packets onto, off of, or across a power line communication (PLC) local area network (LAN) segment. During the connection setup process, the method of the invention specifies the transfer of information elements to the terminating stations on the PLC LAN so that subsequent transfers of bearer, or user data packet, traffic across the PLC LAN use identical encoding, regardless of the user data packet traffic' s bridging requirements. The bridging method of the invention stores information about source and destination stations for a connection at a PLC MAC bridging device. This local store of end-station information allows the PLC MAC bridging device to properly interwork packets on or off of the PLC LAN, without the necessity of embedding the information in individual packets.

The PLC LAN of the method of the invention uses temporary equipment identifiers (TEI) in place of MAC addresses to reduce the amount of overhead in sending data packets over a PLC LAN. TEIs are only valid within the confines of the PLC LAN. Data packets which are received from non-PLC LANs, or which are to be sent over non-PLC LANs, must be modified by a PLC device, e.g., a PLC MAC bridging device, at the edge of the PLC LAN to be compatible with the non-PLC LAN. In the method of the invention, a PLC MAC bridging device, acting in concert with a PLC Central Coordinator (PLC CC), manages the assignment of TEIs, bridging tables, and ConnectionID to enable the proper labeling of data packets for transmission over PLC and non-PLC LANs.

The invention includes:
48-bit MAC addresses and TEIs of all active PLC stations which are communicated distributed to all bridge devices on the PLC LAN by the control coordinator.

A bridge device which caches the source TEI and source 48-bit MAC address of all broadcast data packets received from other bridge devices on the same PLC LAN.

A PLC MAC bridging device which does not establish a connection for bridged traffic until traffic from a source station is received for a destination station where the destination station's source TEI and source 48-bit MAC address are cached in the bridging device. This eliminates the need to set up connections between bridges that may not service the destination station.

A unique connection which is established for every pair of stations that cross a PLC MAC bridge. This includes station pairs wherein one station is connected to the PLC LAN and station pairs wherein both stations are not physically connected to the PLC LAN, *i.e.,* two LAN segments which are bridged across a PLC LAN.

The Central Coordinator (PLC CC) in the PLC LAN, which manages the allocation of PLC LAN resources to bridging connections.

Special operations, which are required for bridging packets to or from the PLC LAN, are performed only in PLC MAC bridging devices. Stations which do not perform bridging functions do not require any special functions to handle bridged packets, and are not aware of which packets require bridging or have been bridged. This allows for less costly implementation of stations which do not directly perform bridging.

The full 48-bit MAC addresses are not transmitted as part of the MAC header for bridged packets. The PLC bridge devices interwork the bridged packets between the PLC LAN and any non-PLC LAN, such that TEIs are utilized only in the PLC LAN and 48-bit MAC addresses are used outside the PLC LAN. In alternate, prior art bridging techniques, such as tunneling, the 48-bit MAC addresses are transmitted with every bridged packet across the PLC LAN.

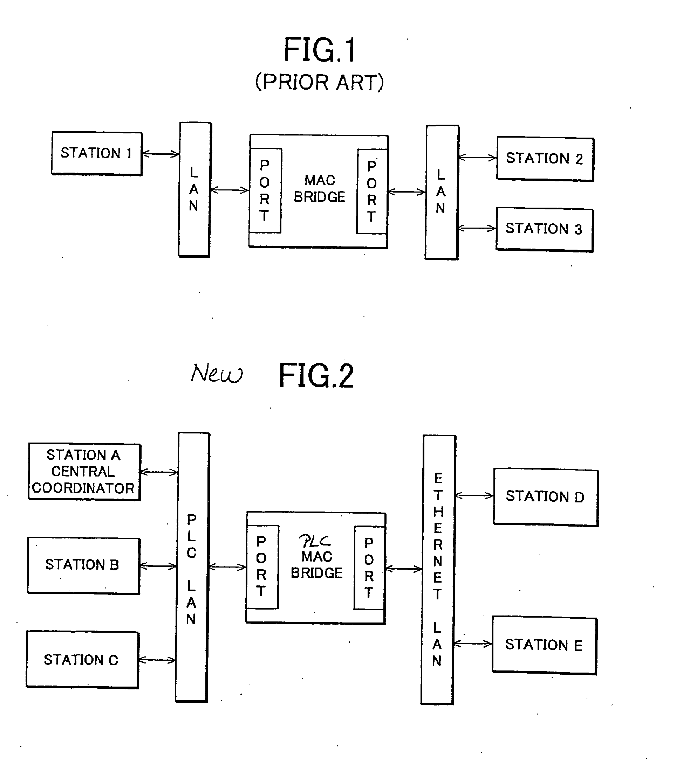

A MAC, or Layer 2, bridge is a device which allows the interconnection of stations attached to separate physical LANs, as shown in Prior Art Fig. 1, such that protocol layers above Layer 2 are unaware that the stations are communicating from different LANs across the MAC bridge. The presence of a MAC bridge may lead to differences in the quality of service (QoS) provided by the MAC sub-layer and it is these QoS differences which may render MAC bridge operation "visible" to upper protocol layers, whereas such operations should be fully transparent to upper protocol layers.

MAC bridging devices in a local area network (LAN) are generally transparent to users and administrators of the LAN in that they generally do not require any configuration or setup, except for the physical connection of the bridged LANs to the bridge's ports. Because of the lack of administrative input, MAC bridges must determine their environment from the traffic observed by the bridge on the bridge ' s LAN ports. MAC bridges do not look at the user data contained in packets, but are limited to interpreting only a few packet information fields, such as packet length, source MAC address, and the destination MAC address. Given a received packet's source MAC address and received LAN port, a MAC bridge builds a "bridging table". A MAC bridge determines which LAN port is to be used to transmit a received packet by referencing the bridging table entry with a source MAC address, and its associated port, which matches the destination MAC address in a received packet.

In the case of PLC MAC bridges, as shown in Fig. 2, the PLC MAC bridge does not normally interconnect different PLC LANs, but rather interconnects a PLC LAN to a different LAN technology, such as Ethernet or 802.11 wireless. In one embodiment of a PLC LAN, user data packet traffic across the PLC network is carried across point-to-point connections setup by a PLC CC. These connections are bi-directional, point-to-point communication links across the PLC LAN, with LAN resources allocated to the connection by the PLC CC. The PLC LAN does not utilize a MAC packet structure which carries the source and destination MAC addresses, but rather uses a more efficient PLC MAC header, which contains a ConnectionID, which PLC stations may use to determine the source and destination stations for the packet. The connection-oriented nature of this PLC LAN, and the special MAC packet structure of PLC packets, requires that PLC MAC bridging devices interwork packets which are bridged onto or off of the PLC LAN.

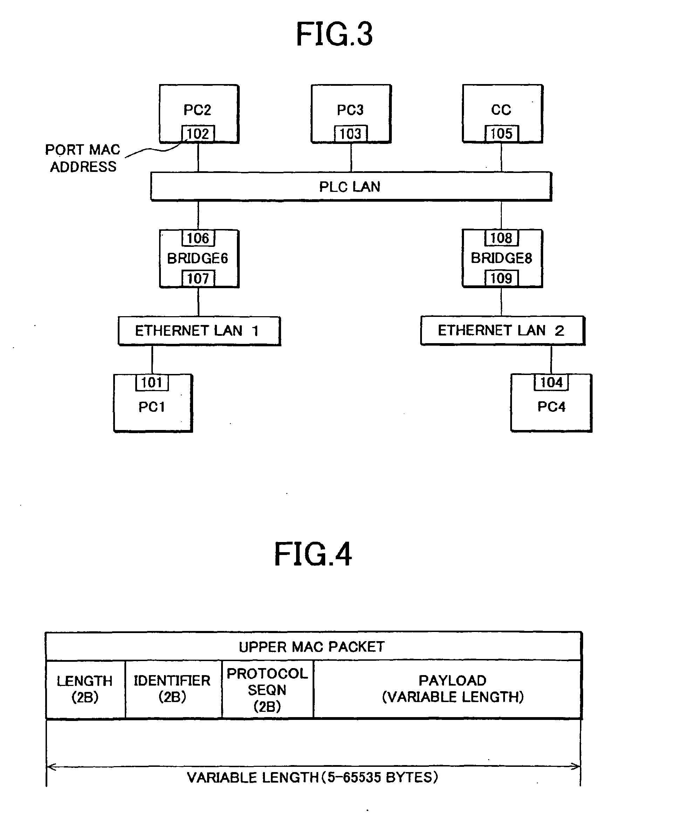

Fig. 3 and Table 1 are provided as an example of a network configuration in operating the method of the invention. In this configuration, PC1 and PC4 are connected to different Ethernet LANS, Ethernet LAN 1 and Ethernet LAN 2, which are bridged across the PLC LAN. Bridge6 and Bridge8 are the two PLC MAC bridging devices on the PLC LAN which connect the PLC LAN to Ethernet LAN 1 and Ethernet LAN 2, respectively. PC2, PC3 and the PLC CC are stations on the PLC LAN along with Bridge6 and Bridge8.

Table 1 identifies addresses of stations shown in Fig. 3. IP addresses are actually 32 bits wide, and are usually depicted as four, eight-bit decimal numbers, separated by a period *e.g*., 192.168.5.207. In this example, however, an IP address is shown as only a single number preceded by a period. MAC addresses are normally 48 bits wide, however, in this example, the MAC addresses are shown as numbers between 101 and 109. The TEIs for PLC stations in this example are assigned numbers between 2 and 8.

**Table 1: Addresses assigned in Fig. 3**

| Station Name | IP Address | MAC Address | TEI |
|---|---|---|---|
| PC1 | **.1** | **101** | **-** |
| PC2 | **.2** | **102** | **2** |
| PC3 | **.3** | **103** | **3** |
| PC4 | **.4** | **104** | **-** |
| CC | **-** | **105** | **0** |
| Bridge6 | **-** | **106 & 107** | **6** |
| Bridge 8 | **-** | **108 & 109** | **8** |

As long as packet traffic is transmitted intra-PLC, stations can identify a packet's source and destination stations by inspecting the ConnectionID field in the PLC MAC Header, as shown in Fig. 4, and then referencing the connection table. However, data packets which are bridged onto the PLC LAN from non-PLC LANs must be interworked by the bridging device. The interworking of packets from a non-PLC LAN by a bridging device includes the re-addressing of the packet by replacing the source 48-bit MAC address and the destination 48-bit MAC address with the ConnectionID, which is contained in the ConnectionID field in the PLC MAC Header. Likewise, data packets that are transmitted from the PLC-LAN onto a non-PLC LAN across a bridging device, must be interworked. In this case, the interworking includes removing the PLC MAC Header and forming the non-PLC MAC Header containing the source and destination 48-bit MAC addresses.

Stations which are on the PLC LAN are aware of all other active stations on the PLC LAN. The information available about each PLC station includes its TEI and 48-bit MAC address. When packets are broadcast on a PLC network, the source TEI is included in the broadcast structure, which may carry more than one broadcast packet, to identify the transmitting device because the ConnectionID has a value BCAST, and cannot, therefor, be used to identify the source device. In normal communications between PLC stations, the 48-bit MAC address is not included in the MAC packet. However, when a bridging device bridges a packet from the PLC network, it uses its local store of the 48-bit source and destination MAC addresses to interwork the packet onto the non-PLC LAN.

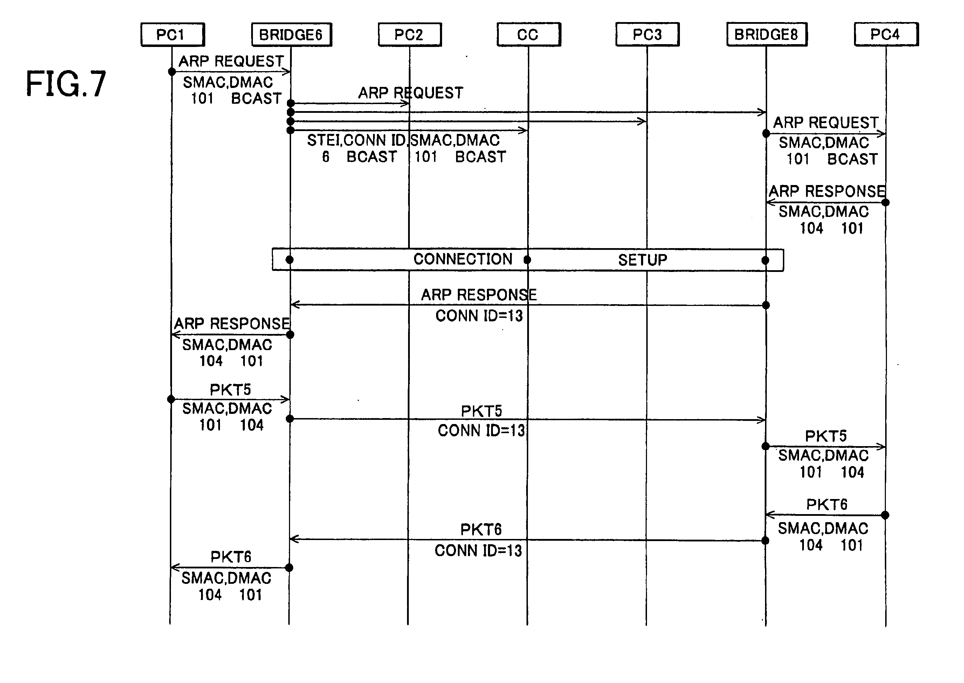

In the method of the invention, packets that are broadcast on the PLC LAN contain three additional information elements not found in unicast packets. The three additional information elements are 1) the 48-bit destination MAC address, 2) the source station's 48-bit MAC address, and 3) the upper layer protocol type. The source station's TEI must be included in the broadcast packet because this information is normally available to receiving stations by referencing the connection table with the "identifier" field of unicast transmissions. It is not available in the ConnectionID field when the identified field is set to the broadcast value. The 48-bit source and destination MAC addresses are included in the broadcast packet so that other PLC MAC bridging device on the PLC network can bridge the packet onto non-PLC LANs as shown in Fig. 7 and described later herein.

### Example One

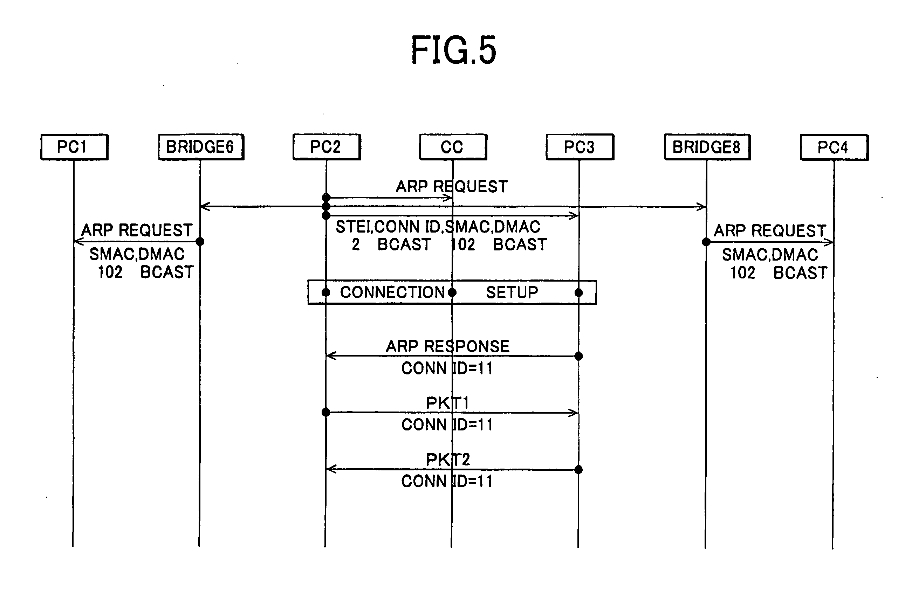

Referring again to Fig. 3, the method of the invention is explained in detail. The first example is for communication from PLC station to PLC station, with known TEIs and an empty address resolution protocol (ARP) table. With reference to Figs. 3 and 5, PLC station PC2 has a data packet, PKT1, which is to be sent to sent to PLC station PC3. Because PC2 and PC3 are active nodes on the PLC LAN, both stations are aware of each other's 48-bit MAC address and TEI. However, in this example, PC3 is assumed to be an inactive station, which means that it's 48-bit MAC address is not in PC2's ARP table. When PC2 discovers that it has no MAC address for the IP address, PC2 uses an address resolution protocol, such as ARP, to locate the destination station's 48-bit MAC address, and then maps the transport protocol (TP) address, which, in this example, is the destination IP address, to the destination MAC address. PC2 thus broadcasts an ARP request to all stations on the PLC LAN.

Any broadcast packet on the PLC LAN must set its ConnectionID to the known broadcast value. In the method of the invention, a broadcast packet on the PLC LAN includes information elements not included in unicast packets transmitted on the PLC LAN. This additional information is the 48-bit destination MAC address, in this case set to the broadcast address used for ARP requests, the source station's 48-bit MAC address, and the upper layer protocol type.

PLC MAC bridging devices, Bridge6 and Bridge8, bridge the ARP broadcast packet from PC2 onto their respective Ethernet LANs. In this example, the destination station for the ARP packet is within the PLC LAN, so the bridging devices will not receive a response packet.

PC3 receives the ARP request packet and determines that it is the destination station for this packet. Because there is no connection established between PC2 and PC3 within the PLC LAN, PC3 initiates a connection setup sequence with the PLC CC and PC2. PC3's action of setting up a connection at this point in the communication setup process anticipates further communications with PC2. If PC2 finds the connection characteristics as requested by PC3 to be unsatisfactory, the channel characteristics may be negotiated to some other setting, at the request of PC2, during the connection setup process, or a new connection may be setup by PC2 at a later time.

After the connection setup sequence is completed, PC2 and PC3 may transmit packets over the newly allocated connection identified as ConnectionID 11 in Fig. 5. In this example, PC2 send PKT1 to PC3 over the established connection. PC3 then responds with PKT2 to PC2 over the same connection.

### Example Two

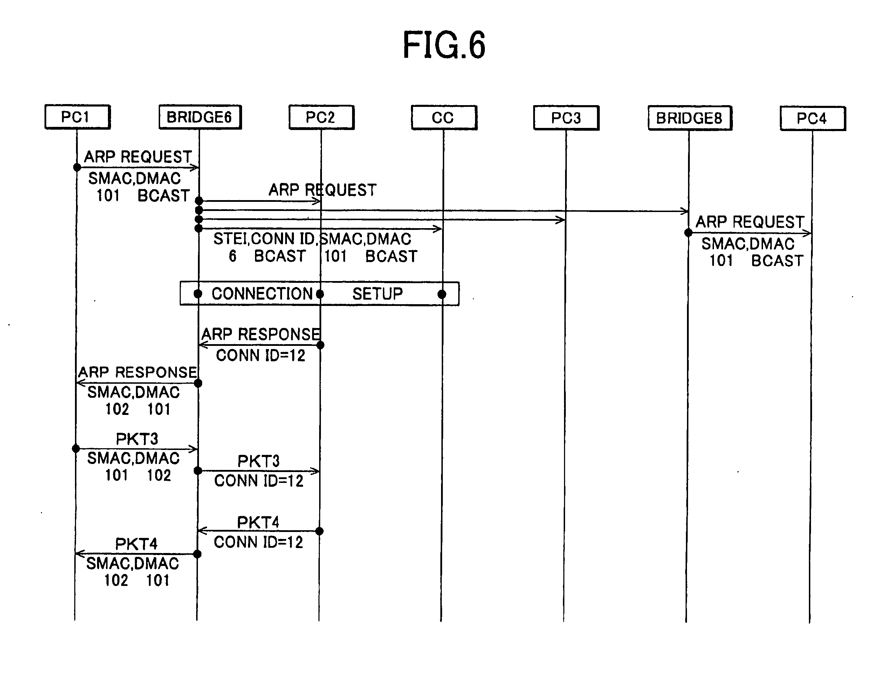

The second example involves a scenario for communication from a non-PLC station to a PLC station. With reference to Figs. 3 and 6, the example illustrates how communication between one station on an Ethernet LAN to another station on a PLC LAN across a PLC MAC bridging device is controlled.

In Fig. 6, station PC1 on Ethernet LAN 1 has a packet to send to station PC2, which is connected to the PLC LAN. In this example, PC1 and PC2 are initially unaware of each other's location or 48-bit MAC address. PC1 transmits an ARP request packet on Ethernet LAN 1 which is received by Bridge6. Bridge6 bridges the packet onto the PLC LAN by transmitting it on the broadcast connection, ConnectionID BCST in this example. The bridge also includes the destination MAC address, in this case the original broadcast address used by PC1, and the 48-bit MAC address of PC1 in the packet transmitted on the PLC LAN.

All stations connected to the PLC LAN receive the packet transmitted by Bridge6. Bridge8 will bridge the ARP broadcast packet from Bridge6 onto its Ethernet LAN. In this example, the destination station for the ARP packet is within the PLC LAN, therefore, Bridge8 will not receive a response packet. PC2 recognizes the packet as meant for it, so it generates an ARP response packet.

As in first example, PC2 initiates a connection setup. However, in this case, the connection is setup to Bridge6. In the connection setup process, PC2 includes the source 48-bit MAC address of PC1 supplied in the broadcast ARP request packet. When Bridge6 accepts the connection, the bridge creates a new entry in its connection table with the source 48-bit MAC address, source TEI, and destination 48-bit MAC address, as shown in Table 2.

**Table 2: Connection table after Example One and Two**

| ConnectionID (ConnID) | Forward MAC | Forward TEI | Reverse MAC | Reverse TEI |
|---|---|---|---|---|
| 11 | 101 | 2 | 103 | 3 |
| 12 | 101 | 6 | 102 | 2 |

Once the connection between PC2 and Bridge6 is established, PC2 transmits the ARP response packet as a unicast transmission to Bridge6 over the connection with ConnectionID 12. When Bridge6 receives the ARP response packet, it bridges the packet onto its Ethernet LAN. When bridging the packet onto the Ethernet LAN, Bridge6 removes the PLC MAC layer information, *i.e.*, length, ConnectionID, and Protocol Sequence Number, and replaces it with Ethernet MAC layer information, which includes the source and destination 48-bit MAC addresses, which the bridge has in its connection table, Table 2. In this case, the Ethernet source address is set to the MAC address of PC2 and the destination MAC address is set to the MAC address of PC1.

When PC1 receives the ARP response from PC2, it updates its ARP tables and then unicasts PKT3 to PC2 on the Ethernet LAN. Bridge6 receives all packets transmitted on the Ethernet connected to its Ethernet port and recognizes PKT3 as a packet which it must bridge to PC2 on the PLC LAN. Bridge6 looks in its connection table to find a connection entry that matches both the 48-bit source MAC and 48-bit destination MAC addresses. Bridge6 finds the entry in the connection table and transmits the bridged PKT3 over the connection with ConnectionID 12 to PC2. PC2 is then able to transmit PKT4 to PC1 in the same manner as the previous ARP response packet.

### Example Three

The third example involves a scenario for communication from a non-PLC station to a non-PLC station across a PLC LAN. With reference to Figs. 3 and 7, the communication between one station on an Ethernet LAN and another station on a different Ethernet LAN, bridging across a PLC LAN, is depicted.

In Fig. 7, station PC1 on Ethernet LAN 1 has a packet to send to station PC4 on Ethernet LAN 2. The two Ethernet LAN segments are bridged together across the PLC LAN. As in the previous examples, the two stations are not aware of each other's location or 48-bit MAC address. PC1 starts the messaging sequence by broadcasting the ARP request packet on Ethernet LAN 1. As in the second example, Bridge6 bridges the ARP request packet onto the PLC LAN, which request packet is received by all PLC LAN stations. Bridge8 bridges the packet from the PLC LAN and to Ethernet LAN 2. PC4 is attached to Ethernet LAN 2 and recognizes that it is the destination for this packet.

When Bridge8 receives the ARP request packet from Bridge6, it caches information about PC1 in its bridging table. The information elements it cached about PC1 are its 48-bit MAC address, LAN port on which PC1's packet is received, and the TEI of the PLC station that sent the packet on the PLC LAN, as shown in Table 3.

**Table 3: Bridge8's bridging table after the ARP request**

| Known MAC Address | Destination LAN Port | Destination TEI | Destination ConnID |
|---|---|---|---|
| 102 | PLC | 2 | - |
| 103 | PLC | 3 | - |
| 105 | PLC | 5 | - |
| 106 | PLC | 6 | - |
| 101 | PLC | 6 | - |

When PC5 receives the ARP request from PC1, it updates its ARP tables and unicasts an ARP response to PC1 on the Ethernet LAN. Bridge8 receives all packets transmitted on the Ethernet LAN connected to its Ethernet port. It recognizes the destination MAC address of the ARP response packet as an address for a station which is on the PLC LAN side of the bridge and recognizes that it must bridge the packet onto the PLC LAN. Bridge8 sees that its bridging table entry does not specify an existing PLC connection on which to place a packet with that 48-bit MAC address, causing the bridge to initiate a connection setup between Bridge8 and Bridge6, indicated by the Bridge6 TEI specified in the bridging table. Bridge6 and Bridge8 make entries in their bridging tables to indicate that the new connection between them carries traffic between PC1 and PC4 over ConnectionID 13, as shown in Tables 4, 5 and 6.

**Table 4: Bridge6 bridging table after the connection setup**

| Known MAC Address | Destination LAN Port | Destination TEI | Destination ConnID |
|---|---|---|---|
| 102 | PLC | 2 | - |
| 103 | PLC | 3 | - |
| 105 | PLC | 5 | - |
| 108 | PLC | 8 | - |
| 101 | ENet | - | - |
| 104 | PLC | 8 | 13 |

**Table 5: Bridge8 bridging table after the connection setup**

| Known MAC Address | Destination LAN Port | Destination TEI | Destination ConnID |
|---|---|---|---|
| 102 | PLC | 2 | - |
| 103 | PLC | 3 | - |
| 105 | PLC | 5 | - |
| 106 | PLC | 6 | - |
| 101 | PLC | 6 | 13 |
| 104 | ENet | - | - |

**Table 6: Connection table after example 10.1,10.2, and 10.3**

| ConnID | Forward MAC | Forward TEI | Reverse MAC | Reverse TEI |
|---|---|---|---|---|
| 11 | 102 | 2 | 103 | 3 |
| 12 | 101 | 6 | 102 | 2 |
| 13 | 101 | 6 | 104 | 8 |

After the connection is established, Bridge8 bridges the ARP response packet over the PLC LAN to Bridge6 on the connection with ConnectionID 13. Bridge6 then bridges the packet onto the Ethernet LAN, as in Example Two. When PC1 receives the ARP response packet, it updates its ARP table and proceeds with the transmission of PKT5 on the Ethernet LAN. Bridge6 receives PKT5 on its Ethernet port and bridges the packet over the PLC LAN on the connection with ConnectionID 13 to Bridge8. Bridge8 then bridges the received PKT5 packet onto Ethernet LAN2, with the destination MAC address set to PC4's 48-bit MAC address. Packet PKT6 is then transmitted by PC4 onto Ethernet LAN 2, bridged by Bridge8 onto the PLC LAN, and then bridged by Bridge6 onto Ethernet LAN 1 to station PC1.

Thus, a method for controlling packet transmission over a PLC LAN, and for the receipt and transmission of packets off of and onto the PLC LAN from external networks, has been disclosed. It will be appreciated that further variations and modifications thereof may be made within the scope of the invention as defined in the appended claims.

## Claims

1. A method of controlling packet transmission in a power line communication (PLC)-based local area network (LAN) and of interworking packets between the PLC LAN and any other non-PLC LAN, comprising:
providing a PLC central coordinator (CC) in the PLC LAN for managing allocation of PLC LAN resources; and
providing, for each active PLC station (PC2, PC3), a temporary equipment identifier (TEI), wherein the TEI is only valid within the confines of the PLC LAN,
providing, for all broadcast packets traversing the PLC LAN, a destination station 48-bit MAC address, a source station 48-bit MAC address, and a TEI of the transmitting PLC station, and
caching, by a PLC MAC bridging device (BRIDGE6, BRIDGE8), the source TEI and source 48-bit MAC address of all broadcast data packets received from other PLC MAC bridging devices (BRIDGE6, BRIDGE8) on the same PLC LAN.

2. The method of claim 1 which includes using a ConnectionID which is contained in the PLC MAC header in place of MAC addresses for any packet while the packet is traversing the PLC LAN.

3. The method of claim 1 which includes providing a PLC MAC bridging device (BRIDGE6, BRIDGE8) for storing information about the source station and the destination station for a connection at the PLC MAC bridging device (BRIDGE6, BRIDGE8).

4. The method of claim 3 wherein a PLC MAC bridging device (BRIDGE6, BRIDGE8) establishes a connection for bridged packets only when a packet from a non-PLC LAN source station (PC1, PC4) is received for a destination station (PC2, PC3) on the PLC LAN where the destination station's TEI, PLC MAC bridging device TEI and destination station 48-bit MAC address are cached in the PLC MAC bridging device (BRIDGE6, BRIDGE8).

5. The method of claim 3 wherein a PLC MAC bridging device (BRIDGE6, BRIDGE8) establishes a connection for bridged packets only when a packet from a PLC LAN source station (PC2, PC3) is received for a destination station (PC1, PC4) not on the PLC LAN where the PLC MAC bridging device TEI and destination station 48-bit MAC address are cached in the PLC MAC bridging device (BRIDGE6, BRIDGE8).

6. The method of claim 1 which includes establishing a unique connection for every pair of stations that cross a PLC MAC bridging device (BRIDGE6, BRIDGE8).

7. The method of claim 1 which includes bridging packets across the PLC LAN only in PLC MAC bridging devices (BRIDGE6, BRIDGE8).

8. The method of claim 1 which includes removing 48-bit MAC addresses of a non-PLC MAC header for bridged packets.

9. The method of claim 8 which includes interworking the bridged packets between the PLC LAN and any non-PLC LAN using a ConnectionID in the PLC MAC header and the TEls only in the PLC LAN and using the 48-bit MAC addresses outside the PLC LAN.

10. The method of claim 9 wherein said interworking of packets from a non-PLC LAN by a PLC MAC bridging device (BRIDGE6, BRIDGE8) includes the re-addressing of the packet by replacing the source station 48-bit MAC address and the destination station 48-bit MAC address with the ConnectionID, which is contained in a ConnectionID field in the PLC MAC Header.

11. The method of claim 9 wherein, for packets which are transmitted from the PLC-LAN onto a non-PLC LAN across a PLC MAC bridging device (BRIDGE6, BRIDGE8), interworking the packets, including removing the PLC MAC header and forming the non-PLC MAC header containing the source station 48-bit MAC address and the destination station 48-bit MAC address.

12. The method of claim 1 which includes, for packets transmitted intra-PLC, identifying a packet's source station and destination station by inspecting a ConnectionID field in a PLC MAC header and referencing a connection table.

13. The method of claim 1, further comprising removing 48-bit MAC addresses of a non-PLC MAC header for bridged packets, and interworking the bridged packets between the PLC LAN and any non-PLC LAN using a ConnectionID in the PLC MAC header and the TEls only in the PLC LAN and using the 48-bit MAC addresses outside the PLC LAN.

14. The method of claim 13 wherein a PLC MAC bridging device (BRIDGE6, BRIDGE8) establishes a connection for bridged packets only when a packet from a non-PLC LAN source station (PC, PC4) is received for a destination station (PC2, PC3) on the PLC LAN where the destination station's TEI, PLC MAC bridging device TEI and destination station 48-bit MAC address are cached in the PLC MAC bridging device (BRIDGE6, BRIDGE8); and wherein a PLC MAC bridging device (BRIDGE6, BRIDGE8) establishes a connection for bridged packets only when a packet from a PLC LAN source station (PC2, PC3) is received for a destination station (PC1, PC4) not on the PLC LAN where the PLC MAC bridging device TEI and destination station 48-bit MAC address are cached in the PLC MAC bridging device (BRIDGE6, BRIDGE8).

15. The method of claim 13 which includes providing a PLC MAC bridging device (BRIDGE6, BRIDGE8) for storing information about the source station and the destination station for a connection at the PLC MAC bridging device.

16. The method of claim 13 wherein said interworking of packets from a non-PLC LAN by a PLC MAC bridging device (BRIDGE6, BRIDGE8) includes the re-addressing of the packet by replacing the source station 48-bit MAC address and the destination station 48-bit MAC address with the ConnectionID, which is contained in the ConnectionID field in the PLC MAC Header; and wherein, for packets which are transmitted from the PLC-LAN onto a non-PLC LAN across a PLC MAC bridging device (BRIDGE6, BRIDGE8), interworking the packets, including removing the PLC MAC header and forming the non-PLC MAC header containing the source station 48-bit MAC address and the destination station 48-bit MAC address.

17. The method of claim 13 which includes establishing a unique connection for every pair of stations that cross a PLC MAC bridging device (BRIDGE6, BRIDGE8).

18. The method of claim 13 which includes bridging packets across the PLC LAN only in PLC MAC bridging devices (BRIDGE6, BRIDGE8).

19. The method of claim 13 which includes, for packets transmitted intra-PLC, identifying a packet's source station and destination station by inspecting a ConnectionID field in the PLC MAC header and referencing a connection table.

20. The method of claim 13 which includes using the ConnectionID in place of MAC addresses for any packet while the packet is traversing the PLC LAN.

## Patentansprüche

1. Verfahren des Steuerns der Paketübertragung in einem lokalen Netzwerk (LAN) auf der Grundlage von Kommunikation über Stromleitungen (PLC) und des Zusammenarbeitens von Paketen zwischen dem PLC-LAN und jeglichem anderen Nicht-PLC-LAN,
mit:
Bereitstellen einer zentralen PLC-Koordinationseinrichtung (CC) im PLC-LAN zum Handhaben der Allokation von PLC-LAN-Ressourcen,
Bereitstellen eines temporären Ausrüstungsidentifizierers (TEI) für jede aktive PLC-Station (PC2, PC3), wobei der TEI nur innerhalb der Grenzen des PLC-LANs gültig ist,
Bereitstellen einer 48-Bit-Zielstations-MAC-Adresse, einer 48-Bit-Quellstations-MAC-Adresse und eines TEIs der übertragenden PLC-Station für sämtliche Sendungspakete, welche das PLC-LAN durchlaufen, und
Cachen des Quell-TEIs und der 48-Bit-Quell-MAC-Adresse sämtlicher Sendungsdatenpakete, die von anderen PLC-MAC-Überbrückungseinrichtungen (BRIDGE6, BRIDGE8) am selben PLC-LAN erhalten wurden, durch eine PLC-MAC-Überbrückungseinrichtung (BRIDGE6, BRIDGE8).

2. Verfahren nach Anspruch 1,
welches aufweist Verwenden einer ConnectionID, welche enthalten ist im PLC-MAC-Header anstelle von MAC-Adressen, für jegliches Paket, während das Paket das PLC-LAN durchläuft.

3. Verfahren nach Anspruch 1,
welches aufweist Bereitstellen einer PLC-MAC-Überbrückungseinrichtung (BRIDGE6, BRIDGE8) zum Speichern von Information in Bezug auf die Quellstation und die Zielstation für eine Verbindung an der PLC-MAC-Überbrückungseinrichtung (BRIDGE6, BRIDGE8).

4. Verfahren nach Anspruch 3,
wobei eine PLC-MAC-Überbrückungseinrichtung (BRIDGE6, BRIDGE8) eine Verbindung für überbrückte Pakete nur dann aufbaut, wenn ein Paket von einer Nicht-PLC-LAN-Quellstatlon (PC1, PC4) empfangen wird für eine Zielstation (PC2, PC3) am PLC-LAN, an dem der TEI der Zielstation, der TEI der PLC-MAC-Überbrückungseinrichtung und die 48-Bit-Zielstations-MAC-Adresse in der PLC-MAC-Überbrückungseinrichtung (BRIDGE6, BRIDGE8) gecacht werden.

5. Verfahren nach Anspruch 3,
wobei eine PLC-MAC-Überbrückungseinrichtung (BRIDGE6, BRIDGE8) eine Verbindung für überbrückte Pakete nur dann aufbaut, wenn ein Paket von einer PLC-LAN-Quellstation (PC2, PC3) für eine Zielstation (PC1, PC4) empfangen wird, die sich nicht am PLC-LAN befindet, an dem der TEI der PLC-MAC-Überbrückungseinrichtung und die 48-Bit-Zielstations-MAC-Adresse in der PLC-MAC-Überbrückungseinrichtung (BRIDGE6, BRIDGE8) gecacht werden.

6. Verfahren nach Anspruch 1,
welches aufweist Aufbauen einer eindeutigen Verbindung für jedes Paar von Stationen, welche eine PLC-MAC-Überbrückungseinrichtung (BRIDGE6, BRIDGE8) kreuzen.

7. Verfahren nach Anspruch 1,
welches aufweist Überbrücken von Paketen über das PLC-LAN nur in PLC-MAC-Überbrückungseinrichtungen (BRIDGE6, BRIDGE8).

8. Verfahren nach Anspruch 1,
welches aufweist Entfernen von 48-Bit-MAC-Adressen eines Nicht-PLC-MAC-Headers für überbrückte Pakete.

9. Verfahren nach Anspruch 8,
welches aufweist Zusammenarbeiten der überbrückten Pakete zwischen dem PLC-LAN und jeglichem Nicht-PLC-LAN unter Verwendung einer ConnectionID im PLC-MAC-Header und der TEIs nur im PLC-LAN und Verwenden der 48-Bit-MAC-Adressen außerhalb des PLC-LANs.

10. Verfahren nach Anspruch 9,
wobei das Zusammenarbeiten von Paketen von einem Nicht-PLC-LAN durch eine PLC-MAC-Überbrückungseinrichtung (BRIDGE6, BRIDGE8) aufweist das Neuadressieren des Pakets durch Ersetzen der 48-Bit-Quellstations-MAC-Adresse und der 48-Bit-Zielstations-MAC-Adresse durch die ConnectionID, welche in einem ConnectionID-Feld im PLC-MAC-Header enthalten ist.

11. Verfahren nach Anspruch 9,
wobei für Pakete, die über eine PLC-MAC-Überbrückungseinrichtung (BRIDGE6, BRIDGE8) vom PLC-LAN auf ein Nicht-PLC-LAN übertragen sind oder werden, ein Zusammenarbeiten der Pakete durchgeführt wird, welches ein Entfernen des PLC-MAC-Headers und das Ausbilden des Nicht-PLC-MAC-Headers, welcher die 48-Bit-Quellstations-MAC-Adresse und die 48-Bit-Zielstations-MAC-Adresse aufweist.

12. Verfahren nach Anspruch 1,
welches für intra-PLC übertragene Pakete ein Identifizieren einer Quellstation und einer Zielstation eines Pakets aufweist durch Prüfen eines ConnectionID-Feldes in einem PLC-MAC-Header und durch Bezugnehmen auf eine Verbindungstabelle.

13. Verfahren nach Anspruch 1,
welches des Weiteren aufweist Entfernen von 48-Bit-MAC-Adressen eines Nicht-PLC-MAC-Headers für überbrückte Pakete und Zusammenarbeiten der überbrückten Pakete zwischen dem PLC-LAN und jeglichem Nicht-PLC-LAN unter Verwendung einer ConnectionID im PLC-MAC-Header und der TEIs nur im PLC-LAN und unter Verwendung der 48-Bit-MAC-Adressen außerhalb des PLC-LANs.

14. Verfahren nach Anspruch 13,
wobei eine PLC-MAC-Überbrückungseinrichtung (BRIDGE6, BRIDGE8) eine Verbindung für überbrückte Pakete nur dann aufbaut, wenn ein Paket von einer Nicht-PLC-LAN-Quellstation (PC1, PC4) für eine Zielstation (PC2, PC3) empfangen wird am PLC-LAN, an dem der TEI der Zielstation, der TEI der PLC-MAC-Überbrückungseinrichtung und die 48-Bit-Zielstations-MAC-Adresse in der PLC-MAC-Überbrückungseinrichtung (BRIDGE6, BRIDGE8) gecacht werden und
wobei eine PLC-MAC-Überbrückungseinrichtung (BRIDGE6, BRIDGE8) eine Verbindung für überbrückte Pakete nur dann etabliert, wenn ein Paket von einer PLC-LAN-Quellstation (PC2, PC3) für eine Zielstation (PC1, PC4) empfangen wird, die sich nicht am PLC-LAN befindet, an dem der TEI der PLC-MAC-Überbrückungseinrichtung und die 48-Bit-Zielstations-MAC-Adresse in der PLC-MAC-Überbrückungseinrichtung (BRIDGE6, BRIDGE8) gecacht werden.

15. Verfahren nach Anspruch 13,
welches aufweist Bereitstellen einer PLC-MAC-Überbrückungseinrichtung (BRIDGE6, BRIDGE8) zum Speichern von Information in Bezug auf die Quellstation und die Zielstation für eine Verbindung an der PLC-MAC-Überbrückungseinrichtung.

16. Verfahren nach Anspruch 13,
wobei das Zusammenarbeiten von Paketen von einem Nicht-PLC-LAN durch eine PLC-MAC-Überbrückungseinrichtung (BRIDGE6, BRIDGE8) ein Neuadressieren des Pakets aufweist durch Ersetzen der 48-Bit-Quellstations-MAC-Adresse und der 48-Bit-Zielstations-MAC-Adresse durch die ConnectionID, welche im ConnectionID-Feld des PLC-MAC-Headers enthalten ist, und
wobei für Pakete, die über eine PLC-MAC-Überbrückungseinrichtung (BRIDGE6, BRIDGE8) vom PLC-LAN auf ein Nicht-PLC-LAN übertragen werden, das Zusammenarbeiten der Pakete ein Entfernen des PLC-MAC-Headers und das Ausbilden des Nicht-PLC-MAC-Headers mit der 48-Bit-Quellstations-MAC-Adresse und der 48-Bit-Zielstations-MAC-Adresse aufweist.

17. Verfahren nach Anspruch 13,
welches aufweist Aufbauen einer eindeutigen Verbindung für jedes Paar von Stationen, welche eine PLC-MAC-Überbrückungseinrichtung (BRIDGE6, BRIDGE8) kreuzen.

18. Verfahren nach Anspruch 13,
welches aufweist Überbrücken von Paketen über das PLC-LAN nur in PLC-MAC-Überbrückungseinrichtungen (BRIDGE6, BRIDGE8).

19. Verfahren nach Anspruch 13,
welches für Pakete, die intra-PLC übertragen wurden, aufweist Identifizieren einer Quellstation und einer Zielstation eines Pakets durch Prüfen eines ConnectionID-Feldes im PLC-MAC-Header und durch Bezugnehmen auf eine Verbindungstabelle.

20. Verfahren nach Anspruch 13,
welches aufweist Verwenden der ConnectionID anstelle von MAC-Adressen für jegliches Paket, während das Paket das PLC-LAN durchläuft.

## Revendications

1. Procédé de commande de transmission de paquet dans un réseau local (LAN) à base de courants porteurs en ligne (CPL) et d'interfonctionnement de paquets entre le LAN sur CPL et un autre LAN non sur CPL, comprenant :
la fourniture d'un coordonnateur central de CPL (CC) dans le LAN sur CPL pour gérer l'attribution de ressources de LAN sur CPL ; et
la fourniture, pour chaque station CPL active (PC2, PC3), d'un identificateur d'équipement provisoire (TEI) dans lequel le TEI est seulement valide à l'intérieur des limites du LAN sur CPL,
la fourniture, pour tous les paquets diffusés traversant le LAN sur CPL, d'une adresse MAC de station de destination à 48 bits, d'une adresse MAC de station source à 48 bits et d'un TEI de station CPL d'émission, et
la mise en cache, par un dispositif de pontage CPL MAC (BRIDGE6, BRIDGE8), du TEI de source et de l'adresse MAC de source à 48 bits de tous les paquets de données diffusés reçus en provenance d'autres dispositifs de pontage CPL MAC (BRIDGE6, BRIDGE8) sur le même LAN sur CPL.

2. Procédé selon la revendication 1 qui inclut l'utilisation d'un ID de Connexion qui est contenu dans l'en-tête MAC sur CPL au lieu d'adresses MAC pour n'importe quel paquet tandis que le paquet traverse le LAN sur CPL.

3. Procédé selon la revendication 1 qui inclut la fourniture d'un dispositif de pontage CPL MAC (BRIDGE6, BRIDGE8) pour stocker des informations concernant la station source et la station de destination pour une connexion au niveau du dispositif de pontage CPL MAC (BRIDGE6, BRIDGE8).

4. Procédé selon la revendication 3, dans lequel un dispositif de pontage CPL MAC (BRIDGE6, BRIDGE8) établit une connexion pour des paquets pontés seulement quand un paquet en provenance d'une station source de LAN non sur CPL (PC1, PC4) est reçu pour une station de destination (PC2, PC3) sur le LAN sur CPL où le TEI de la station de destination, le TEI de dispositif de pontage CPL MAC et l'adresse MAC de station de destination à 48 bits sont mis en cache dans le dispositif de pontage CPL MAC (BRIDGE6, BRIDGE8).

5. Procédé selon la revendication 3, dans lequel un dispositif de pontage CPL MAC (BRIDGE6, BRIDGE8) établit une connexion pour des paquets pontés seulement quand un paquet en provenance d'une station source de LAN sur CPL (PC2, PC3) est reçu pour une station de destination (PC1, PC4) pas sur le LAN sur CPL où le TEI de dispositif de pontage CPL MAC et l'adresse MAC de station de destination à 48 bits sont mis en cache dans le dispositif de pontage CPL MAC (BRIDGE6, BRIDGE8).

6. Procédé selon la revendication 1 qui inclut l'établissement d'une connexion unique pour chaque couple de stations qui traversent un dispositif de pontage CPL MAC (BRIDGE6, BRIDGE8).

7. Procédé selon la revendication 1 qui inclut le pontage de paquets à travers le LAN sur CPL seulement dans des dispositifs de pontage CPL MAC (BRIDGE6, BRIDGE8).

8. Procédé selon la revendication 1 qui inclut la suppression d'adresses MAC à 48 bits d'un en-tête MAC non sur CPL pour des paquets pontés.

9. Procédé selon la revendication 8 qui inclut l'interfonctionnement des paquets pontés entre le LAN sur CPL et n'importe quel LAN non sur CPL en utilisant un ID de Connexion dans l'en-tête MAC sur CPL et les TEI seulement dans le LAN sur CPL et en utilisant les adresses MAC à 48 bits à l'extérieur du LAN sur CPL.

10. Procédé selon la revendication 9, dans lequel ledit interfonctionnement de paquets en provenance d'un LAN non sur CPL par un dispositif de pontage CPL MAC (BRIDGE6, BRIDGE8) inclut le ré-adressage du paquet en remplaçant l'adresse MAC de station source à 48 bits et l'adresse MAC de station de destination à 48 bits par l'ID de Connexion, qui est contenu dans un champ ID de Connexion dans l'en-tête MAC sur CPL.

11. Procédé selon la revendication 9, dans lequel, pour des paquets qui sont émis depuis le LAN sur CPL vers un LAN non sur CPL à travers un dispositif de pontage CPL MAC (BRIDGE6, BRIDGEB), interfonctionnement des paquets, incluant la suppression de l'en-tête MAC sur CPL et la formation de l'en-tête MAC non sur CPL contenant l'adresse MAC de station source à 48 bits et l'adresse MAC de station de destination à 48 bits.

12. Procédé selon la revendication 1, qui inclut, pour des paquets transmis intra-CPL, l'identification d'une station source de paquet et d'une station de destination en examinant un champ ID de Connexion dans un en-tête MAC sur CPL et en faisant référence à une table de connexion.

13. Procédé selon la revendication 1, comprenant en outre la suppression d'adresses MAC à 48 bits d'un en-tête MAC non sur CPL pour des paquets pontés, et l'interfonctionnement des paquets pontés entre le LAN sur CPL et n'importe quel LAN non sur CPL en utilisant un ID de Connexion dans l'en-tête MAC sur CPL et les TEI seulement dans le LAN sur CPL et en utilisant les adresses MAC à 48 bits à l'extérieur du LAN sur CPL.

14. Procédé selon la revendication 13, dans lequel un dispositif de pontage CPL MAC (BRIDGE6, BRIDGE8) établit une connexion pour des paquets pontés seulement quand un paquet en provenance d'une station source de LAN non sur CPL (PC1, PC4) est reçu pour une station de destination (PC2, PC3) sur le LAN sur CPL où le TEI de station de destination, le TEI de dispositif de pontage CPL MAC et l'adresse MAC de station de destination à 48 bits sont mis en cache dans le dispositif de pontage CPL MAC (BRIDGE6, BRIDGE8) ; et dans lequel un dispositif de pontage CPL MAC (BRIDGE6, BRIDGE8) établit une connexion pour des paquets pontés seulement quand un paquet en provenance d'une station source de LAN sur CPL (PC2, PC3) est reçu pour une station de destination (PC1, PC4) pas sur le LAN sur CPL où le TEI de dispositif de pontage CPL MAC et l'adresse MAC de station de destination à 48 bits sont mis en cache dans le dispositif de pontage CPL MAC (BRIDGE6, BRIDGE8).

15. Procédé selon la revendication 13 qui inclut la fourniture d'un dispositif de pontage CPL MAC (BRIDGE6, BRIDGE8) pour stocker des informations concernant la station source et la station de destination pour une connexion au dispositif de pontage CPL MAC.

16. Procédé selon la revendication 13, dans lequel ledit interfonctionnement de paquets en provenance d'un LAN non sur CPL par un dispositif de pontage CPL MAC (BRIDGE6, BRIDGE8) inclut le ré-adressage du paquet en remplaçant l'adresse MAC de station source à 48 bits et l'adresse MAC de station de destination à 48 bits par l'ID de Connexion, qui est contenu dans le champ ID de Connexion dans l'en-tête MAC sur CPL ; et dans lequel, pour des paquets qui sont émis depuis le LAN sur CPL vers un LAN non sur CPL à travers un dispositif de pontage CPL MAC (BRIDGE6, BRIDGE8), interfonctionnement des paquets, incluant la suppression de l'en-tête MAC sur CPL et la formation de l'en-tête MAC non sur CPL contenant l'adresse MAC de station source à 48 bits et l'adresse MAC de station de destination à 48 bits.

17. Procédé selon la revendication 13 qui inclut l'établissement d'une connexion unique pour chaque couple de stations qui traversent un dispositif de pontage CPL MAC (BRIDGE6, BRIDGE8).

18. Procédé selon la revendication 13 qui inclut le pontage de paquets à travers le LAN sur CPL seulement dans des dispositifs de pontage CPL MAC (BRIDGE6, BRIDGE8).

19. Procédé selon la revendication 13 qui inclut, pour des paquets émis intra-CPL, l'identification d'une station source de paquet et d'une station de destination en examinant un champ ID de Connexion dans l'en-tête MAC sur CPL et en faisant référence à une table de connexion.

20. Procédé selon la revendication 13 qui inclut l'utilisation de l'ID de Connexion au lieu d'adresses MAC pour n'importe quel paquet tandis que le paquet traverse le LAN sur CPL.
